# EUROPÄISCHE PATENTANMELDUNG

(11) **EP 1 583 384 A1**
(43) Veröffentlichungstag der Anmeldung: **05.10.2005**
(21) Anmeldenummer: 04007567.3
(22) Anmeldetag: 29.03.2004
(51) Int. Cl.: H04Q 7/38, G01S 5/02, G01S 5/00

(54) **Verfahren zum Ermitteln einer Postition einer Teilnehmerstation und eines Funkkommunikationssystems sowie Vorrichtung**

(71) Anmelder: SIEMENS AKTIENGESELLSCHAFT, 80333 München (DE)
(72) Erfinder: Kuipers, Martin, 13599 Berlin (DE); Meiling, Axel, 13597 Berlin (DE)

(57) **Zusammenfassung**

Bei einem Verfahren zum Ermitteln einer Position einer Teilnehmerstation (MS) eines Funkkommunikationssystems liegt eine Empfangsinformation darüber vor, welche Funkstationen (BS1, BS4) des Funkkommunikationssystems die Teilnehmerstation (MS) empfängt. Erfindungsgemäß wird als Position der TeilnehmerStation (MS) ein Heimatfuhkbereich (B14) ermittelt, falls der Empfangsinformation entnehmbar ist, dass die Teilnehmerstation (MS) wenigstens zwei vorbestimmte Funkstationen (BS1, BS4) empfängt.

## Beschreibung

Die Erfindung betrifft ein Verfahren zum Ermitteln einer Position einer Teilnehmerstation eines Funkkommunikationssystems sowie eine entsprechende Vorrichtung.

In Funkkommunikationssystemen können Kunden mittels Teilnehmerstationen auf positionsabhängige Dienste (location based services) zugreifen. Positionsabhängige Dienste sind Dienste, die die momentane Position der entsprechenden Teilnehmerstationen berücksichtigen. Beispielsweise ist ein positionsabhängiger Dienst ein Navigationsdienst, der eine Route von dem momentanen Aufenthaltsort der Teilnehmerstation bis zu einem gewünschten Zielort ermittelt und auf einer mit der Teilnehmerstation verbundenen Ausgabevorrichtung darstellt.

Unter einem positionsabhängigen Dienst ist auch eine ortsbezogene Vergebührung von Kommunikationsverbindungen von Teilnehmerstationen eines Funkkommunikationssystems zu verstehen. Für eine Teilnehmerstation werden ein Bereich oder mehrere Bereiche festgelegt, für die jeweils oder insgesamt eine bestimmte Vergebührung von Kommunikationsverbindungen erfolgt. Hält sich die Teilnehmerstation in einem derart festgelegten Bereich auf, so werden Kommunikationsverbindungen anders vergebührt, als wenn sich die Teilnehmerstation außerhalb des Bereichs befindet. Derartige Bereiche sind beispielsweise unter den Bezeichnungen "Heimatfunkbereiche" oder "Homezones" bekannt.

Aus der DE 199 11 938 ist beispielsweise ein Verfahren bekannt, bei dem einer Teilnehmerstation eines Funkkommunikationssystems die Koordinaten eines für sie festgelegten Heimatfunkbereiches bekannt sind. Vor dem Aufbau einer Kommunikationsverbindung mit einer Funkstation des Funkkommunikationssystems empfängt die Teilnehmerstation eine Information über die geografische Lage (Koordinaten) der Funkstation und überprüft, ob sich die Funkstation innerhalb ihres Heimatfunkbereichs befindet. Ist die Funkstation innerhalb des Heimatfunkbereichs lokalisiert, wird dies auf einer Ausgabeeinheit der Teilnehmerstation visuell angezeigt und über diese Funkstation abgewickelte Kommunikationsverbindungen werden nachfolgend entsprechend einem dem Heimatfunkbereich zugeordneten Tarif vergebührt.

Das in der DE 199 11 938 beschriebene Verfahren hat jedoch den Nachteil, dass ein von einer Teilnehmerstation tatsächlich als Heimatfunkbereich genutzter Bereich mindestens so groß ist, wie die Fläche der Funkzelle, die eine Funkstation bedient, die sich innerhalb des Heimatfunkbereichs befindet. Das Verfahren geht nämlich auch dann davon aus, dass sich die Teilnehmerstation in ihrem Heimatfunkbereich befindet, wenn dies gar nicht der Fall ist. Dies liegt daran, dass das Verfahren die Position der Funkstation mit dem Heimatfunkbereich vergleicht und nicht die tatsächliche Position der Teilnehmerstation. Insbesondere in Funkkommunikationssystemen, in denen Funkstationen sehr große Funkzellen bedienen, können mit diesem Verfahren daher nur entsprechend sehr große Heimatfunkbereiche festgelegt bzw. verwendet werden. Für den Betreiber eines Funkkommunikationssystems ist es jedoch wünschenswert, eine beliebige und möglichst feine Strukturierung von Heimatfunkbereichen vornehmen zu können, um insbesondere eine differenzierte Vergebührung für Funkkommunikationsverbindungen vornehmen zu können.

Der Erfindung liegt daher die Aufgabe zugrunde, ein vorteilhaftes Verfahren sowie eine entsprechende Vorrichtung zum Ermitteln einer Position einer Teilnehmerstation eines Funkkommunikationssystems anzugeben, welche ermöglichen, Heimatfunkbereiche zu verwenden, deren Fläche geringer ist, als die Fläche einer Funkzelle, die eine Funkstation bedient, mit der die Teilnehmerstation eine Kommunikationsverbindung unterhält oder aufbauen möchte.

Die Aufgabe wird mit dem Verfahren sowie der Vorrichtung gemäß den unabhängigen Ansprüchen gelöst.

Vorteilhafte Weiterbildungen der Erfindung sind Gegenstand der abhängigen Ansprüche.

Bei dem erfindungsgemäßen Verfahren zum Ermitteln einer Position einer Teilnehmerstation eines Funkkommunikationssystems liegt eine Empfangsinformation darüber vor, welche Funkstationen des Funkkommunikationssystems die Teilnehmerstation empfängt. Erfindungsgemäß wird als Position der Teilnehmerstation ein Heimatfunkbereich ermittelt, falls der Empfangsinformation entnehmbar ist, dass die Teilnehmerstation wenigstens zwei vorbestimmte Funkstationen empfängt.

Die Erfindung ermöglicht einen Heimatfunkbereich festzulegen, dessen Fläche einem Überlappungsbereich der Funkbereiche der wenigstens zwei vorbestimmten Funkstationen entspricht. Nur wenn sich die Teilnehmerstation im Überlappungsbereich der Funkbereiche befindet kann sie die wenigstens zwei vorbestimmten Funkstationen empfangen. Je mehr vorbestimmte Funkstationen von der Teilnehmerstation empfangen werden müssen, um sich im Heimatfunkbereich zu befinden, desto kleiner ist der derart festgelegte Heimatfunkbereich. Durch die Erfindung kann ein Heimatfunkbereich im Unterschied zu der DE 199 11 938 so festgelegt werden, dass bei einer Überprüfung, ob sich die Teilnehmerstation in dem Heimatfunkbereich befindet, die aktuelle Position der Teilnehmerstationen anstelle der Position der bedienenden Funkstation berücksichtigt wird. Glei chzeitig ermöglicht die Erfindung einen oder mehrere Heimatfunkbereiche festzulegen, die jeweils kleiner sind, als die Fläche eines Funkbereichs einer Funkstation oder als eine von einer Funkstation des Funkkommunikationssystems bediente Funkzelle.

Unter einem Funkbereich einer Funkstation ist diejenige Fläche zu verstehen, innerhalb derer eine Empfangsvorrichtung, beispielsweise eine Teilnehmerstation, Signale von der Funkstation empfangen und als Signale der Funkstation identifizieren und/oder verarbeiten kann. Innerhalb des Funkbereichs einer Funkstation ist eine Teilnehmerstation beispielsweise in der Lage Informationen zu empfangen, die über einen Rundsendekanal von der Funkstation gesendet werden. Weiterhin kann die Teilnehmerstation Signale von unterschiedlichen Funkstationen empfangen, den Funkstationen zuordnen und jeweils eine Empfangsleistung bestimmen, wenn sich die Teilnehmerstation in einem Überlappungsbereich der Funkstationen befindet. In einem Überlappungsbereich empfängt die Teilnehmerstation insbesondere Rundsendekanäle der entsprechenden Funkstationen.

Vorteilhafterweise wird als Position der Teilnehmerstationen der Heimatfunkbereich ermittelt, falls der Empfangsinformation zusätzlich entnehmbar ist, dass die jeweilige Empfangsleistung der wenigstens zwei vorbestimmten Funkstationen größer oder gleich einem vorbestimmten Grenzwert ist. Auf diese Weise kann die Teilnehmerstation in einem Heimatfunkbereich lokalisiert werden, der kleiner ist, als der Überlappungsbereich der Funkbereiche der wenigstens zwei vorbestimmten Funkstationen. Nur wenn die Empfangsleistung der wenigstens zwei vorbestimmten Funkstationen jeweils einen Mindestwert hat, befindet sich die Teilnehmerstation in dem Heimatfunkbereich.

Eine noch genauere Festlegung des Heimatfunkbereichs bzw. eine damit einhergehende genauere Überprüfung, ob sich die Teilnehmerstation in dem Heimatfunkbereich aufhält, kann dadurch erreicht werden, dass als Position der Teilnehmerstation der Heimatfunkbereich ermittelt wird, falls die Teilnehmerstation zusätzlich von einer vorbestimmten, dem Heimatfunkbereich zugeordneten Funkstation bedient wird. Selbstverständlich kann die so genannte dienende Funkstation, d.h. diejenige Funkstation über die die Teilnehmerstation Kommunikationsverbindungen aufbauen kann, eine der wenigstens zwei vorbestimmten Funkstationen sein.

Da Messungen von Empfangsleistungen von Funkstationen mit Messfehlern behaftet sind und beispielsweise aufgrund einer Bewegung der Teilnehmerstation Schwankungen unterworfen sein können, ist es von Vorteil, dass der Empfangsinformation entnehmbare Empfangsleistungen der empfangenen Funkstationen jeweils durch Mittelwertbildung ermittelt werden.

Mit Vorteil erfolgt das Ermitteln der Position in der Teilnehmerstation. Die Teilnehmerstation kann so selbst vor dem Aufbau einer Kommunikationsverbindung feststellen, ob sie sich in dem Heimatfunkbereich befindet. Durch ein entsprechendes akustisches oder optisches Signal, beispielsweise durch ein entsprechendes Symbol auf einem Bildschirm der Teilnehmerstation, wird dem Benutzer der Teilnehmerstation angezeigt, ob sich die Teilnehmerstation in dem Heimatfunkbereich befindet. Auf diese Weise kann der Benutzer der Teilnehmerstation den Aufbau einer Kommunikationsverbindung in Abhängigkeit von dieser Anzeige steuern. Der Aufbau bestimmter Kommuni kationsverbindungen wird beispielsweise nur dann vom Benutzer initiiert, wenn sich die Teilnehmerstation in dem Heimatfunkbereich befindet.

Alternativ oder zusätzlich erfolgt das Ermitteln der Position mit Vorteil in einer netzseitigen Vorrichtung des Funkkommunikationssystems. Auf diese Weise kann im Funkkommunikationssystem überprüft werden, ob sich die Teilnehmerstation tatsächlich in dem Heimatfunkbereich befindet. Entsprechend dem Ergebnis dieser Überprüfung kann beispielsweise eine Vergebührung von Kommunikationsverbindungen der Teiln ehmerstation vorgenommen werden oder dem Benutzer mittels der Teilnehmerstation der Empfang bestimmter Dienste angeboten werden. Durch eine Überprüfung der Position der Teilnehm erstation durch das Funkkommunikationssystem kann überprüft werden, ob die Teilnehmerstation, beispielsweise aufgrund einer Manipulation, dem Funkkommunikationssystem fälschlicher Weise mitteilt, dass sie sich im Heimatfunkbereich befindet.

Die erfindungsgemäße Vorrichtung weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

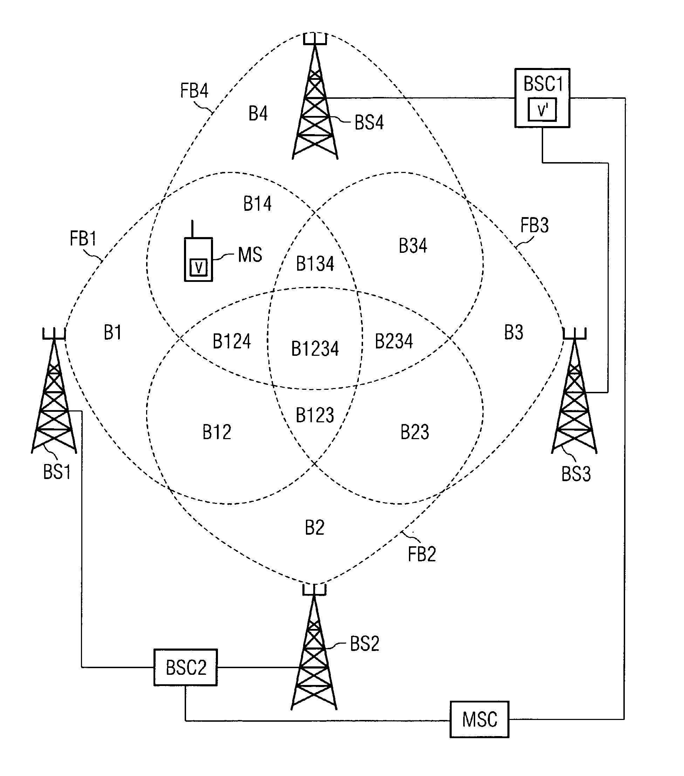

Die Erfindung wird im Folgenden anhand eines in der Figur dargestellten Ausführungsbeispiels näher erläutert.

Eine Teilnehmerstation ist beispielsweise ein Mobiltelefon, oder auch eine ortsbewegliche oder ortsfeste Vorrichtung zur Übertragung von Bild- und/oder Tondaten, zum Fax-, Short-Message-Service SMS-, Multimedia-Messaging-Service MMS-und/oder Email-Versand und/oder zum Internetzugang.

Eine Funkstation ist eine netzseitige Einrichtung eines Funkkommunikationssystems, die Mittel aufweist, um mit einer Teilnehmerstation eine Funkverbindung aufzubauen und Nutz-und/oder Signalisierungsdaten auszutauschen. Nachfolgend wird als Funkstation eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme, beispielsweise nach dem GSM-(Global System for Mobile Communications) oder dem UMTS- (Universal Mobile Telecommunications System) Standard. Auch zukünftige Mobilfunksysteme, beispielsweise der vierten Generation; sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of E-lectrical and Electronical Engineers) 802.11 a bis i, HiperLAN 1 und HiperLAN 2 (HiperLAN: High Performance Radio Local Area Network) sowie Bluetooth-Netze.

Im Folgenden wird die Erfindung am Beispiel eines Mobilfunk-systems nach dem GSM-Standard beschrieben, ohne jedoch damit zum Ausdruck bringen zu wollen, dass die Erfindung hierauf beschränkt sein soll.

Die Figur zeigt schematisch eine erste Basisstation BS1, eine zweite Basisstation BS2, eine dritte Basisstation BS3 und eine vierte Basisstation BS4 eines Funkkommunikationssystems. Jede der Basisstationen BS1, BS2, BS3, BS4 hat einen durch gestrichelte Linien dargestellten Funkbereich FB1, FB2, FB3, FB4. In diesem Ausführungsbeispiel sind die Funkbereiche zwiebelförmig. Selbstverständlich können Funkbereiche auch beliebe andere Formen haben. Innerhalb der Funkbereiche FB1, FB2, FB3, FB4 können Teilnehmerstationen Signale von den Basisstationen BS1, BS2, BS3, BS4 empfangen und/oder Kommunikationsverbindungen unterhalten.

Die Funkbereiche FB1, FB2, FB3, FB4 überlappen in einer Art und Weise, dass es innerhalb jedes Funkbereiches FB1, FB2, FB3, FB4 Gebiete B1, B2, B3, B4 gibt, in denen Teilnehmerstationen ausschließlich Signale von derjenigen Basisstation BS1, BS2, BS3, BS4 empfangen können, die den entsprechenden Funkbereich FB1, FB2, FB3, FB4 aufspannt. Weiterhin existieren Gebiete B12, B23, B14, B34, B123, B124, B234, B1234, innerhalb derer Teilnehmerstationen eine, zwei oder sogar drei Basisstationen zusätzlich empfangen können. Diese zuvor beschriebenen Gebiete sind mathematisch betrachtet geschlossene Gebiete und in der Figur jeweils von gestrichelten Linien von wenigstens drei der vier Funkbereiche FB1, FB2, FB3, FB4 umrandet. Die Bezugszeichen der Gebiete beginnen alle mit einem großen Buchstaben "B" gefolgt von einer, zwei, drei oder vier Zahlen, wobei jede der Zahlen die der Zahl entsprechende Basisstation BS1, BS2, BS3, BS4 repräsentiert. In dem Gebiet B1234 können Teilnehmerstationen somit die erste Basisstation BS1, die zweite Basisstation BS2, die dritte Basisstation BS3 und die vierte Basisstation BS4 empfangen. Im Gebiet B14 hingegen können Teilnehmerstationen lediglich die erste Basisstation BS1 und die vierte Basisstation BS4 empfangen.

In dem Gebiet B14 befindet sich eine Teilnehmerstation MS, die Signale sowohl von der ersten Basisstation BS1 als auch von der vierten Basisstation BS4 empfängt. Weiterhin wird die Teilnehmerstation MS von der vierten Basisstation BS4 bedient, d.h. Kommunikationsverbindungen werden üblicherweise mit der vierten Basisstation BS4 aufgebaut, obwohl die Teilnehmerstation MS auch Signale von der ersten Basisstation BS1 empfangen kann. Die vierte Basisstation BS4 ist beispielsweise deshalb die so genannte dienende Basisstation (serving base station), weil ihre Signale von der Teilnehmerstation MS mit einer Empfangsleistung empfangen werden, die größer ist, als die Empfangsleistung von Signalen der ersten Basisstation BS1.

In der Teilnehmerstation MS ist eine Information vorhanden, der entnehmbar ist, dass ein Heimatfunkbereich der Teilnehmerstation MS dadurch festgelegt ist, dass die Teilnehmerstation MS innerhalb des Heimatfunkbereiches Signale sowohl von der ersten Basisstation BS1 als auch von der vierten Basisstation BS4 empfangen kann, während gleichzeitig die vierte Basisstation BS4 die dienende Basisstation für die Teilnehmerstation MS ist. Vorzugsweise wird der Teilnehmerstation die Information über ihren Heimatfunkbereich netzseitig vorgegeben. Selbstverständlich kann die Teilnehmers tation auch selbst einen Heimatfunkbereich vorschlagen. Eine Entscheidung über die Annahme des Vorschlags wird jedoch netzseitig getroffen und der Teilnehmerstation mitgeteilt. In der Teilnehmerstation ist weiterhin eine Empfangsinformation vorhanden, der entnehmbar ist, welche Basisstationen BS1, BS2, BS3, BS4 die Teilnehmerstation MS an ihrem aktuellen Aufenthaltsort empfangen kann.

Die Teilnehmerstation MS empfängt von der dienenden vierten Basisstation BS4 eine so genannte Nachbarschaftsliste, der entnehmbar ist, welche Basisstationen sich in der Nachbarschaft der vierten Basisstation BS4 befinden und von der Teilnehmerstation MS je nach ihrer Position in dem vierten Funkbereich FB4 empfangen werden können. In der Nachbarschaftsliste sind die erste, die zweite und die dritte Bas isstation BS1, BS2, BS3 angegeben. Die Teilnehmerstation MS versucht aufgrund der in der Nachbarschaftsliste angegebenen Basisstationen BS1, BS2, BS3 Signale von diesen Basisstationen BS1, BS2, BS3 zu empfangen. Da sich die Teilnehmerstation MS in dem Gebiet B14 befindet, empfängt sie die erste Basisstation BS1 und die vierte Basisstation BS4 und erzeugt eine Empfangsinformation, der entnehmbar ist, dass sie die erste Basisstation BS1 und die vierte Basisstation BS4 empfängt. Weiterhin ist der Empfangsinformation entnehmbar, welche der beiden Basisstationen mit der größeren Empfangsleistung empfangen wird und/oder welchen Wert die Empfangsleistung jeder der Basisstationen BS1, BS4 hat und/oder ob die jeweiligen Empfangsleistungen einen Grenzwert überschreiten.

Durch einen in der Vorrichtung V durchgeführten Vergleich der Empfangsinformationen mit der Information über den Heimatfunkbereich stellt die Teilnehmerstation MS fest, dass sie sich in ihrem Heimatfunkbereich befindet. Einem Benutzer der Teilnehmerstation wird der Aufenthalt in dem Heimatfunkbereich durch ein akustisches Signal und/oder die Anzeige eines entsprechenden Symbols auf einer Anzeigevorrichtung der Teilnehmerstation MS mitgeteilt.

Bei einem Aufbau einer Kommunikationsverbindung mit der vie r-ten Basisstation BS4 und/oder in beispielsweise netzseitig vorgegebenen Zeitabständen übermittelt die Teilnehmerstation MS die Empfangsinformation an die vierte Basisstation BS4. Die vierte Basisstation BS4 leitet die Empfangsinformationen an einen ersten Basisstationskontroller BSC1 weiter, der sowohl die vierte Basisstation BS4 als auch die dritte Basisstation BS3 steuert. Der erste Basisstationskontroller BSC1 ist beispielsweise über eine Leitung mit einer Vermittlungseinheit MSC verbunden, über die Daten von Kommunikationsverbindungen beispielsweise in ein Festnetz oder in das Internet weitergeleitet werden. Die Vermittlungseinheit MSC ist mit einer Mehrzahl von Basisstationskontrollern verbunden, von denen der Übersichtlichkeit halber nur der erste Basisstationskontroller BSC1 und ein zweiter Basisstationskontroller BSC2 dargestellt sind. Der zweite Basisstationskontroller BSC2 dient zur Steuerung der ersten Basisstation BS1 und der zweiten Basisstation BS2.

In dem ersten Basisstationskontroller BSC1 befindet sich eine Steuereinheit V', in der gespeichert ist, durch welche Basisstationen der Heimatfunkbereich der Teilnehmerstation MS festgelegt ist. Durch einen Vergleich der Empfangsinformation der Teilnehmerstation MS mit der entsprechenden Information über den Heimatfunkbereich der Teilnehmerstation MS stellt der erste Basisstationskontroller BSC1 fest, dass sich die Teilnehmerstation MS in ihrem Heimatfunkbereich befindet.

Zusätzlich zu der Empfangsinformation kann die Teilnehmerstation MS auch eine Information an die vierte Basisstation BS4 senden, der entnehmbar ist, dass sie sich in ihrem Heimatfunkbereich befindet. In diesem Fall kann netzseitig entschieden werden, ob dieser Information vertraut wird und eine Überprüfung beispielsweise durch den ersten Basisstationskontroller BSC1 entfällt.

Befindet sich die Teilnehmerstation MS in einem der Gebiete, in denen weder die erste Basisstation BS1, noch die vierte Basisstation BS4 empfangen werden können, so stellt die Vorrichtung der Teilnehmerstation MS und/oder die Steuereinheit V' des ersten Basisstationskontrollers BSC1 oder eine entsprechende Steuereinheit eines anderen Basisstationskontrollers fest, dass sich die Teilnehmerstation MS nicht in ihrem Heimatfunkbereich befindet. Derartige Gebiete sind die Gebiete B2, B23 und B3. Die Teilnehmerstation MS befindet sich ebenfalls nach einer Überprüfung durch eine entsprechende Vorrichtung nicht in ihrem Heimatfunkgebiet, wenn sie sich in einem Gebiet aufhält, dem entweder die erste Basisstation BS1 oder die vierte Basisstation B4 empfangen werden kann. Derartige Gebiete sind in diesem Ausführungsbeispiel die Gebiete B1, B4, B12, B123, B234 und B34.

In diesem Ausführungsbeispiel ist der Heimatfunkbereich der Teilnehmerstation MS derart festgelegt, dass sich die Teilnehmerstation MS genau dann in ihrem Heimatfunkbereich befindet, wenn sie sowohl die erste Basisstation BS1 als auch die vierte Basisstation BS4 empfängt und die vierte Basisstation BS4 die dienende Basisstation der Teilnehmerstation MS ist. Dies ist der Fall, wenn sich die Teilnehmerstation MS entweder in dem Gebiet B14 oder in dem Gebiet B134 befindet. In den Gebieten B124 und B1234 empfängt die Teilnehmerstation MS zwar sowohl Signale von der ersten Basisstation BS1 als auch von der vierten Basisstation BS4 die Empfangsleistung der Signale der vierten Basisstation BS4 unterschreiten jedoch einen zuvor beispielsweise vom Funkkommunikationssystem festgelegten Grenzwert. Weiterhin wird in dem Gebiet B1234 die zweite Basisstation BS2 mit einer deutlich größeren Empfangsleistung empfangen, als die vierte Basisstation BS4, so dass für Teilnehmerstationen, die sich in dem Gebiet B1234 befinden die zweite Basisstation BS2 die dienende Basisstation ist. Bei einem Aufenthalt der Teilnehmerstation MS in dem Gebiet B1234 ergibt eine Überprüfung durch die Vorrichtung V oder die Steuereinheit V', dass die zweite Basisstation BS2 die dienende Basisstation ist und bereits aus diesem Grund ergibt sich, dass sich die Teilnehmerstation MS nicht in ihrem Heimatfunkbereich befindet.

Der Heimatfunkbereich der Teilnehmerstation MS ist beispielsweise derart festgelegt, dass Kommunikationsverbindungen, die die Teilnehmerstation führt, während sie sich in ihrem Heimatfunkbereich aufhält, mit einem anderen Tarif vergebührt werden, als Kommunikationsverbindungen, die die Teilnehmerstation außerhalb ihres Heimatfunkbereiches führt.

Selbstverständlich können für die Teilnehmerstation MS auch weitere Heimatfunkbereiche festgelegt sein. Für jeden der Heimatfunkbereiche können sowohl gleiche, als auch unterschiedliche Vergebührungsmodelle verwendet werden.

Selbstverständlich kann eine Vorrichtung zum Überprüfen, ob sich die Teilnehmerstation MS in ihrem Heimatfunkbereich befindet, auch in der Vermittlungseinheit MSC oder einer der Vermittlungseinheit MSC übergeordneten, in der Figur aus Gründen der Übersichtlichkeit nicht dargestellten Einheit angeordnet sein.

Selbstverständlich kann ein Heimatfunkbereich für die Teilnehmerstation MS auch derart festgelegt werden, dass die Teilnehmerstation von mehr als zwei vorbestimmten Basisstationen Signale empfangen muss, um sich in ihrem Heimatfunkbereich zu befinden. Beispielsweise kann das Gebiet B1234 als Heimatfunkbereich festgelegt sein. In diesem Fall befindet sich die Teilnehmerstation MS nur dann in ihrem Heimatfunkbereich, wenn sie die Signale aller vier Basisstationen BS1, BS2, BS3, BS4 empfängt.

Selbstverständlich kann ein Heimatfunkbereich für die Teilnehmerstation auch derart festgelegt sein, dass eine neben dem Empfang einer vorbestimmten Anzahl von Funkstationen eine auf- oder absteigende Sortierung der Funkstationen nach der jeweiligen Empfangsleistung eine vorbestimmte Reihenfolge ergeben muss, damit sich die Teilnehmerstation in ihrem Heimatfunkbereich befindet.

Alternativ oder zusätzlich zu den genannten Möglichkeiten, einen Heimatfunkbereich festzulegen, kann festgelegt sein, dass sich die Teilnehmerstation in Ihrem Heimatfunkbereich befindet, wenn sie von N vorbestimmten Funkstationen wenigstens M Funkstationen empfängt, wobei M<=N ist.

Eine Information für die Teilnehmerstation MS über ihre Heimatfunkbereiche kann auf einer SIM-Karte (SIM: Subscriber I-dentity Module), beispielsweise bei kreisförmigen Herlmatfunkbereichen jeweils unter Verwendung eines Kreismittelpunktes und eines Radius, gespeichert sein. Zusätzlich liegt es im Rahmen der Erfindung, diese Information auf Anforderung einer netzseitigen Einrichtung und/oder auf Anforderung der Teilnehmerstation MS verändern zu können. Sowohl der Betreiber des Funkkommunikationssystems als auch der Benutzer der Teilnehmerstation, können entsprechende Signale austauschen, anhand derer eine heue Festlegung eines Heimatfunkbereiches erfolgt. Heima tfunkbereiche können dadurch flexibel an die Bedürfnisse des Netzbetreibers und/oder des Benutzers der Teilnehmerstation MS angepasst werden.

## Patentansprüche

1. Verfahren zum Ermitteln einer Position einer Teilnehmerstation (MS) eines Funkkommunikationssystems, bei dem eine Empfangsinformation darüber vorliegt, welche Funkstationen (BS1, BS4) des Funkkommunikationssystems die Teilnehmerstation empfängt,
**dadurch gekennzeichnet,**
**dass** als Position der Teilnehmerstation (MS) ein Heimatfunkbereich (B14, B134) ermittelt wird, falls der Empfangsinformation entnehmbar ist, dass die Teilnehmerstation (MS) wenigstens zwei vorbestimmte Funkstationen (BS1, BS4) empfängt.

2. Verfahren nach Anspruch 1,
**dadurch gekennzeichnet,**
**dass** als Position der Teilnehmerstation (MS) der Heimatfunkbereich (B14, B134) ermittelt wird, falls der Empfangsinformation zusätzlich entnehmbar ist, dass die jeweilige Empfangsleistung der wenigstens zwei vorbestimmten Funkstationen (BS1, BS4) größer oder gleich einem vorbestimmten Grenzwert ist.

3. Verfahren nach einem der Ansprüche 1 oder 2,
**dadurch gekennzeichnet ,**
**dass** als Position der Teilnehmerstation (MS) der Heimatfunkbereich (B14, B134) ermittelt wird, falls die Teilnehmerstation (MS) zusätzlich von einer vorbestimmten, dem Heimatfunkbereich (B14, B134) zugeordneten Funkstation (BS4) bedient wird.

4. Verfahren nach einem der Ansprüche 2 oder 3,
**dadurch gekennzeichnet,**
**dass** der Empfangsinformation entnehmbare Empfangsleistungen der empfangenen Funkstationen (BS1, BS4) jeweils durch Mittelwertbildung ermittelt werden.

5. Verfahren nach einem der Ansprüche 1 bis 4,
**dadurch gekennzeichnet ,**
**dass** das Ermitteln der Position in der Teilnehmerstation (MS) erfolgt.

6. Verfahren nach einem der Ansprüche 1 bis 5,
**dadurch gekennzeichnet,**
**dass** das Ermitteln der Position in einer netzseitigen Vorrichtung (V') des Funkkommunikationssystems erfolgt.

7. Vorrichtung (V, V') zum Ermitteln einer Position einer Teilnehmerstation (MS) eines Funkkommunikationssystems, wobei in der Vorrichtung (V, V') eine Empfangsinformation darüber vorliegt, welche Funkstationen (BS1, BS4) die Teilnehmerstation (MS) empfängt,
**dadurch gekennzeichnet,**
**dass** die Vorrichtung (V, V') zum Ermitteln eines Heimatfunkbereiches (B14, B134) als Position der Teilnehmerstation (MS) ausgebildet ist, falls der Empfangsinformation entnehmbar ist, dass die Teilnehmerstation (MS) wenigstens zwei vorbestimmte Funkstationen (BS1, BS4) empfängt.

8. Vorrichtung nach Anspruch 7,
**dadurch gekennzeichnet ,**
**dass** die Vorrichtung (V, V') zum Ermitteln des Heimatfunkbereiches (B14, B134) als Position der Teilnehmerstation (MS) ausgebildet ist, falls der Empfangsinformation zusätzlich entnehmbar ist, dass die jeweilige Empfangsleistung der wenigstens zwei vorbestimmten Funkstationen (BS1, BS4) größer oder gleich einem vorbestimmten Grenzwert ist.

9. Vorrichtung nach einem der Ansprüche 7 oder 8,
**dadurch gekennzeichnet,**
**dass** die Vorrichtung (V, V') zum Ermitteln des Heimatfunkbereiches (B14, B134) als Position der Teilnehmerstation (MS) ausgebildet ist, falls die Teilnehmerstation (MS) zusätzlich von einer vorbestimmten, dem Heimatfunkbereich (B14, B134) zugeordneten Funkstation (BS4) bedient wird.
